(19) Europäisches Patentamt
European Patent Office
Office européen des brevets

(11) **EP 1 928 676 B1**

(12) **EUROPÄISCHE PATENTSCHRIFT**

(45) Veröffentlichungstag und Bekanntmachung des Hinweises auf die Patenterteilung:
**02.12.2009 Patentblatt 2009/49**

(21) Anmeldenummer: **06791784.9**

(22) Anmeldetag: **01.09.2006**

(51) Int Cl.:
**B60G 17/052** (2006.01)

(86) Internationale Anmeldenummer:
**PCT/EP2006/008556**

(87) Internationale Veröffentlichungsnummer:
**WO 2007/033754 (29.03.2007 Gazette 2007/13)**

(54) **NIVEAUREGELSYSTEM FÜR EIN FAHRZEUG UND VERFAHREN ZUM BETREIBEN EINES NIVEAUREGELSYSTEMS FÜR EIN FAHRZEUG**

LEVEL CONTROL SYSTEM FOR A VEHICLE, AND METHOD FOR THE OPERATION THEREOF

SYSTEME DE CORRECTION D'ASSIETTE DE VEHICULE ET PROCEDE DE FONCTIONNEMENT ASSOCIE

(84) Benannte Vertragsstaaten:
**AT BE BG CH CY CZ DE DK EE ES FI FR GB GR HU IE IS IT LI LT LU LV MC NL PL PT RO SE SI SK TR**

(30) Priorität: **20.09.2005 DE 102005044806**

(43) Veröffentlichungstag der Anmeldung:
**11.06.2008 Patentblatt 2008/24**

(73) Patentinhaber: **Continental Aktiengesellschaft 30165 Hannover (DE)**

(72) Erfinder:
• **ILIAS, Heike**
  **30900 Wedemark (DE)**
• **NETTELMANN, Marc**
  **30826 Garbsen (DE)**
• **SPRENGEL, Thomas**
  **70180 Stuttgart (DE)**

(74) Vertreter: **Finger, Karsten**
  **Continental Aktiengesellschaft**
  **Patente und Lizenzen**
  **Postfach 169**
  **D-30001 Hannover (DE)**

(56) Entgegenhaltungen:
**EP-A2- 0 945 288      EP-A2- 1 106 402**
**DE-C1- 10 006 024     GB-A- 2 344 323**

**EP 1 928 676 B1**

**Beschreibung**

Die Erfindung bezieht sich auf ein Niveauregelsystem für ein Fahrzeug sowie ein Verfahren zum Betreiben eines Niveauregelsystems für ein Fahrzeug, mit einem Druckerzeuger zur Erzeugung einer Druckdifferenz zwischen einem Druckmittelspeicher und zumindest einer druckgesteuerten Stelleinrichtung, mittels derer sich ein vorgegebenes Fahrzeugaufbauniveau einstellen lässt, und mit einer Ventileinrichtung zur Durchführung eines Überströmvorgangs zwischen dem Druckmittelspeicher und der zumindest einen druckgesteuerten Stelleinrichtung.

Ein derartiges Niveauregelsystem für ein Fahrzeug geht aus der Druckschrift DE 100 06 024 C1 hervor. Das Niveauregelsystem weist zumindest eine Luftfeder auf, die sich zum Anheben des Fahrzeugaufbaus mit Druckluft befüllen lässt. Wird aufgrund einer durch Verwendung eines Kompressors zwischen einem Druckluftspeicher und der zumindest einen Luftfeder erzeugten Druckdifferenz festgestellt, dass der Luftdruck in dem Druckluftspeicher größer ist als derjenige in der zumindest einen Luftfeder, so wird die zumindest eine Luftfeder zum Anheben des Fahrzeugaufbaus zunächst durch Betätigung einer Ventileinrichtung mit dem Druckluftspeicher derart verbunden, dass Druckluft aus dem Druckluftspeicher in die zumindest eine Luftfeder überströmt. Dabei gleicht sich der Luftdruck in der Luftfeder zunehmend demjenigen im Druckluftspeicher an.

Erreicht die zwischen dem Druckluftspeicher und der zumindest einen Luftfeder vorliegende Druckdifferenz einen vorgegebenen Schwellenwert, der im wesentlichen der Herstellung eines Druckgleichgewichts zwischen dem Druckluftspeicher und der zumindest einen Luftfeder entspricht, und wird festgestellt, dass ein weiteres Befüllen der zumindest einen Luftfeder erforderlich ist, um den Fahrzeugaufbau auf das gewünschte Niveau anzuheben, so erfolgt dies durch zusätzliche Betätigung des Kompressors.

Nachteilig ist, dass der Kompressor erst dann betätigt wird, wenn sich im wesentlichen ein Druckgleichgewicht zwischen dem Druckluftspeicher und der zumindest einen Luftfeder eingestellt hat. Zeitliche Verzögerungen bei der Durchführung des Anhebevorgangs sind damit unvermeidbar.

Die EP 0 945 288 A2 offenbart eine Luftfederungsanlage für ein Fahrzeug bei dem der zentrale Druckspeicher der Anlage dann befüllt wird, wenn der gemessene Druck im Druckspeicher bis auf einen unteren Schwellwert abgesunken ist. Die Druckbefüllung erfolgt dann solange, bis ein oberer Schwellwert des Druckes im Druckspeicher erreicht wird. Dieser obere Schwellwert wird dabei abhängig vom Luftdruck der Umgebung festgelegt. Eine direkte Orientierung der Druckbefüllung vom Druckzustand in den Luftfederelementen findet hierbei nicht statt.

Es ist daher Aufgabe der vorliegenden Erfindung, eine Vorrichtung bzw. ein Verfahren der eingangs genannten Art derart weiterzubilden, dass eine weitgehend verzögerungsfreie Einstellung eines vorgegebenen Fahrzeugaufbauniveaus auf Grundlage der Durchführung eines Überströmvorgangs zwischen dem Druckmittelspeicher und der zumindest einen druckgesteuerten Stelleinrichtung möglich ist.

Diese Aufgabe wird gemäß den Merkmalen des Patentanspruchs 1 bzw. des Patentanspruchs 11 gelöst.

Das Niveauregelsystem für ein Fahrzeug umfasst neben einem Druckerzeuger zur Erzeugung einer Druckdifferenz zwischen einem Druckmittelspeicher und zumindest einer druckgesteuerten Stelleinrichtung, mittels derer sich ein vorgegebenes Fahrzeugaufbauniveau einstellen lässt, weiterhin eine Ventileinrichtung zur Durchführung eines Überströmvorgangs zwischen dem Druckmittelspeicher und der zumindest einen druckgesteuerten Stelleinrichtung.

Erfindungsgemäß entscheidet eine Auswerteeinheit auf Grundlage eines für den Fall der Durchführung des Überströmvorgangs zu erwartenden Fahrzeugaufbauniveaus, ob und inwieweit die Einstellung des vorgegebenen Fahrzeugaufbauniveaus durch ausschließliche Betätigung der Ventileinrichtung möglich ist.

Auf diese Weise lässt sich bereits vor Beginn des Einstellvorgangs feststellen, ob das vorgegebene Fahrzeugaufbauniveau voraussichtlich auf Grundlage der Durchführung eines Überströmvorgangs einstellbar ist und ob gegebenenfalls zusätzlich oder alternativ eine entsprechende Betätigung des Druckerzeugers erforderlich ist. Unnötige Verzögerungen aufgrund einer verspäteten Betätigung des Druckerzeugers lassen sich damit weitgehend vermeiden.

Bei dem Druckerzeuger handelt es sich typischerweise um einen elektrisch betriebenen Kompressor gängiger Bauart. Da der Kompressor nur dann betätigt wird, wenn die Einstellung des vorgegebenen Fahrzeugaufbauniveaus durch ausschließliche Betätigung der Ventileinrichtung nicht oder nur bedingt möglich ist, wird die Kompressorlaufzeit insgesamt gesehen verringert, sodass sich nicht nur einem frühzeitigen Verschleiß des Kompressors vorbeugen, sondern auch der Geräuschpegel im Bereich des Fahrzeugs deutlich mindern lässt. Letzteres ist insbesondere bei Stillstand des Fahrzeugs von besonderer Bedeutung.

Das Niveauregelsystem dient beispielsweise zum zeitweisen Absenken des Fahrzeugaufbaus im Falle höherer Fahrtgeschwindigkeiten, um den Luftwiderstand und damit den Kraftstoffverbrauch des Fahrzeugs zu verringern.

Vorteilhafte Ausführungen des erfindungemäßen Niveauregelsystems gehen aus den Unteransprüchen hervor.

Die Entscheidung, ob und inwieweit die Einstellung des vorgegebenen Fahrzeugaufbauniveaus durch ausschließliche Betätigung der Ventileinrichtung möglich ist, kann in Abhängigkeit eines rechnerisch einfach auszuführenden Vergleichs zwischen dem vorgegebenen Fahrzeugaufbauniveau und dem für die Durchführung des Überströmvorgangs zu erwartenden Fahrzeugaufbauniveau entschieden werden.

Ist beispielsweise ein Anheben des Fahrzeugaufbaus auf ein vorgegebenes Fahrzeugaufbauniveau beabsichtigt, so ist dies durch ausschließliche Betätigung der Ventileinrichtung voraussichtlich dann möglich, wenn sich aufgrund des Vergleichs ergibt, dass das zu erwartende Fahrzeugaufbauniveau (abzüglich einer vorgegebenen Sicherheitsreserve) größer oder gleich dem vorgegebenen Fahrzeugaufbauniveau ist. Für den Fall eines Absenkens des Fahrzeugaufbaus auf ein vorgegebenes Fahrzeugaufbauniveau gelten analoge Betrachtungen.

Durch geeignete Vorgabe der Sicherheitsreserve lässt sich auf indirektem Wege erreichen, dass das Anheben bzw. Absenken des Fahrzeugaufbaus durch ausschließliche Betätigung der Ventileinrichtung nur dann erfolgt, wenn über den gesamten Einstellvorgang gesehen ein ausreichendes Druckgefälle zwischen dem Druckmittelspeicher und der zumindest einen druckgesteuerten Stelleinrichtung vorliegt, um ein rasches Erreichen des vorgegebenen Fahrzeugaufbauniveaus auf Grundlage der Durchführung des Überströmvorgangs zu gewährleisten.

Wird festgestellt, dass die Einstellung des vorgegebenen Fahrzeugaufbauniveaus durch ausschließliche Betätigung der Ventileinrichtung nicht innerhalb einer vorgegebenen Zeitspanne möglich ist, was durch Auswertung der zu Beginn des Einstellvorgangs zwischen dem Druckmittelspeicher und der zumindest einen druckgesteuerten Stelleinrichtung vorliegenden Druckverhältnisse unschwer erkannt werden kann, so erfolgt - um den Einstellvorgang rascher zu gestalten - eine unterstützende Betätigung des Druckerzeugers.

Die unterstützende Betätigung des Druckerzeugers kann hierbei insbesondere mit Ablauf der vorgegebenen Zeitspanne erfolgen, wenn beispielsweise festgestellt wird, dass das vorgegebene Fahrzeugaufbauniveau entgegen der ursprünglichen Voraussage bzw. den ursprünglichen Erwartungen durch ausschließliche Betätigung der Ventileinrichtung noch nicht erreicht worden ist.

Das zu erwartende Fahrzeugaufbauniveau lässt sich insbesondere auf Basis einer zwischen dem Druckmittelspeicher und der zumindest einen druckgesteuerten Stelleinrichtung ermittelten Druckdifferenz berechnen. Hierzu wird zunächst abgeschätzt, welche Druckmittelmenge zwischen dem Druckmittelspeicher und der zumindest einen druckgesteuerten Stelleinrichtung überzuströmen vermag, bis ein Druckausgleich hergestellt ist. Aus der so abgeschätzten Druckmittelmenge wird schließlich das an der zumindest einen druckgesteuerten Stelleinrichtung zu erwartende Fahrzeugaufbauniveau berechnet. Die Ermittlung der Druckdifferenz kann hierbei durch Verwendung gängiger Drucksensoren erfolgen.

Bei der zumindest einen druckgesteuerten Stelleinrichtung handelt es sich vorzugsweise um ein pneumatisches oder hydraulisches Federbein üblicher Bauart, das insbesondere Bestandteil eines aktiven Fahrwerks des Fahrzeugs ist. Derartige aktive Fahrwerke sind bei vielen Fahrzeugen ohnehin vorhanden, sodass sich deren kosteneffiziente Mitnutzung anbietet.

Vorteilhafterweise handelt es sich um ein Niveauregelsystem mit geschlossenem Druckmittelkreislauf, sodass ein Austreten insbesondere von durch Verunreinigungen (wie beispielsweise Schmiermittelrückständen, verschleißbedingtem Abrieb und dergleichen) belasteter Druckluft in die Umgebung von vornherein ausgeschlossen werden kann.

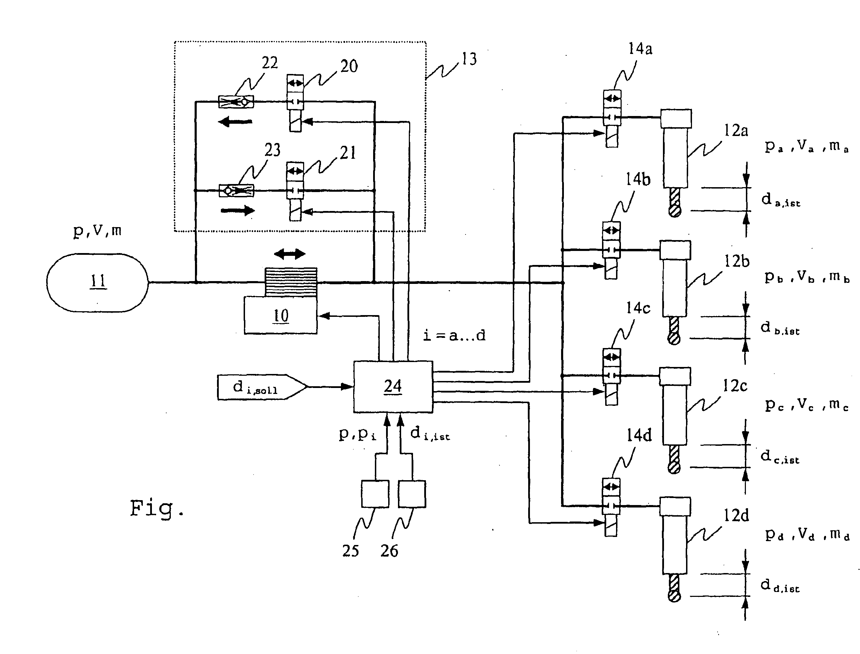

Das erfindungsgemäße Niveauregelsystem für ein Fahrzeug bzw. das erfindungsgemäße Verfahren zum Betreiben eines Niveauregelsystems für ein Fahrzeug wird im folgenden anhand der beigefügten Zeichnung näher erläutert. Dabei zeigt die einzige Figur ein schematisch dargestelltes Ausführungsbeispiel des erfindungsgemäßen Niveauregelsystems.

In der Figur sind elektrische Steuerleitungen durch dünne und Druckleitungen durch dicke durchgezogene Linien dargestellt.

Das Niveauregelsystem umfasst einen Druckerzeuger 10 zur Erzeugung einer Druckdifferenz zwischen einem Druckmittelspeicher 11 und zumindest einer druckgesteuerten Stelleinrichtung 12i (i=a...d), mittels derer sich ein vorgegebenes Fahrzeugaufbauniveau $d_{i,soll}$ einstellen lässt. Des weiteren ist eine Ventileinrichtung 13 zur Durchführung eines Überströmvorgangs zwischen dem Druckmittelspeicher 11 und der zumindest einen druckgesteuerten Stelleinrichtung 12i vorhanden.

Der Druckerzeuger 10, der im vorliegenden Fall als elektrisch betätigbarer Kompressor ausgebildet ist, erlaubt es, Druckmittel im geschlossenen Druckmittelkreislauf des Niveauregelsystems zwischen dem Druckmittelspeicher 11 und der zumindest einen druckgesteuerten Stelleinrichtung 12i hin und her zu pumpen.

Beispielsgemäß handelt es sich bei der zumindest einen druckgesteuerten Stelleinrichtung 12i um ein pneumatisches oder hydraulisches Federbein, das zur Unterdrückung unerwünschter fahrtbedingter Fahrzeugaufbaubewegungen zwischen einem Fahrzeugrad und einer dem Fahrzeugaufbau zugeordneten Abstützstelle angeordnet ist. Das Federbein umfasst im wesentlichen einen Druckzylinder sowie einen darin druckverschiebbar angeordneten Kolben.

Im vorliegenden Fall soll es sich um ein vierrädriges Fahrzeug handeln, sodass insgesamt vier der vorstehend erwähnten Stelleinrichtungen 12a bis 12d vorgesehen sind, wobei die Stelleinrichtungen 12a bis 12d Bestandteil eines aktiven Fahrwerks des Fahrzeugs sind. Jeder der Stelleinrichtungen 12a bis 12d ist jeweils ein Absperrventil 14a bis 14d vorgeschaltet, wodurch eine voneinander unabhängige Ansteuerung der Stelleinrichtungen 12a bis 12d ermöglicht wird.

Die Ventileinrichtung 13 umfasst zur Durchführung des Überströmvorgangs für jede der beiden möglichen Strömungsrichtungen ein separates elektrisch betätigbares Bypassventil 20 bzw. 21. Ein jeweils in Serie geschaltetes Einwegventil 22 bzw. 23 verhindert, dass bei geöffnetem Bypassventil 20 bzw. 21 ein ungewolltes Rückströmen von Druckmittel entgegen der beabsichtigten Strömungsrichtung auftreten kann.

Die in der Figur dargestellte Ventileinrichtung 13 soll hierbei lediglich beispielhaften Charakter besitzen. So kann die Ventileinrichtung 13 alternativ auch einen beliebigen anderen Aufbau aufweisen, der es erlaubt, in gezielter Weise einen Überströmvorgang vom Druckmittelspeicher 11 in Richtung der zumindest einen Stelleinrichtung 12i (und umgekehrt) durchzuführen. Derartige Ventileinrichtungen sind im Falle eines geschlossenen Druckmittelkreislaufs prinzipbedingt vorhanden, sodass sich in einem solchen Falle von vornherein deren kosteneffiziente Mitnutzung anbietet.

Des Weiteren ist eine Auswerteeinheit 24 vorhanden, die auf Grundlage eines für den Fall der Durchführung des Überströmvorgangs zu erwartenden Fahrzeugaufbauniveaus $d_{i,erw}$ entscheidet, ob und inwieweit eine Einstellung des vorgegebenen Fahrzeugaufbauniveaus $d_{i,soll}$ durch ausschließliche Betätigung der Ventileinrichtung 13 möglich ist, wobei letzteres in Abhängigkeit eines Vergleichs zwischen dem vorgegebenen Fahrzeugaufbauniveau $d_{i,soll}$ und dem zu erwartenden Fahrzeugaufbauniveaus $d_{i,erw}$ erfolgt.

Das einzustellende Fahrzeugaufbauniveau $d_{i,soll}$ wird beispielsweise von einer nicht dargestellten Steuereinrichtung vorgegeben, die dem Niveauregelsystem übergeordnet und zum zeitweisen Absenken des Fahrzeugaufbaus im Falle höherer Fahrtgeschwindigkeiten oder zur Korrektur ladungswechselbedingter Lageänderungen des Fahrzeugaufbaus vorgesehen ist.

Das für den Fall der Durchführung des Überströmvorgangs zu erwartende Fahrzeugaufbauniveau $d_{i,erw}$ wird von der Auswerteeinheit 24 auf Basis einer ermittelten Druckdifferenz

$$\Delta p = p - \overline{p}_{i,i=a...d} \qquad (1.1)$$

berechnet, wobei zur Ermittlung der Druckdifferenz $\Delta p$ neben dem aktuellen Innendruck p des Druckmittelspeichers 11 ein mittlerer Druck $\overline{p}_{i,i=a...d}$ Berücksichtigung findet, der sich als Mittelwert der Innendrücke der vom Einstellvorgang betroffenen Stelleinrichtungen 12i, also derjenigen Stelleinrichtungen 12i, an denen die Einstellung eines vorgegebenen Fahrzeugaufbauniveaus $d_{i,soll}$ beabsichtigt ist, ergibt. Für diesen gilt ein allgemeiner Zusammenhang der Gestalt

$$\overline{p}_{i,i=a...d} = \frac{\sum\limits_i g_i p_i}{\sum\limits_i g_i} \quad , \qquad (1.2)$$

wobei neben dem aktuellen Innendruck $p_i$ der Stelleinrichtung 12i ferner ein jeweils zugehöriger Gewichtungsfaktor $g_i$ eingeht, der für die vom Einstellvorgang betroffenen Stelleinrichtungen 12i den Wert 1 und für die übrigen Stelleinrichtungen 12i den Wert 0 annimmt. Ist für lediglich eine der Stelleinrichtungen 12i die Durchführung eines Einstellvorgangs beabsichtigt, so gilt dementsprechend $\overline{p}_{i,i=a...d} = p$.

Die Erfassung der Innendrücke p und $p_i$ erfolgt mittels einer Druckerfassungseinrichtung 25, deren Signale der Auswerteeinheit 24 zur Ermittlung der Druckdifferenz $\Delta p$ zugeführt werden. Die Druckerfassungseinrichtung 25 weist hierzu mehrere nicht dargestellte Drucksensoren auf, die jeweils dem Druckmittelspeicher 11 sowie den Stelleinrichtungen 12i zugeordnet sind.

Ausgehend von der ermittelten Druckdifferenz $\Delta p$ schätzt die Auswerteeinheit 24 unter Berücksichtigung des bekannten Innenvolumens V des Druckmittelspeichers 11 sowie des von der jeweiligen Kolbenstellung abhängigen aktuellen Innenvolumens $V_i$ der vom Einstellvorgang betroffenen Stelleinrichtungen 12i ab, welche Druckmittelmenge $\Delta N_{max}$ zwischen dem Druckmittelspeicher 11 und den betreffenden Stelleinrichtungen 12i überzuströmen vermag, bis ein Druckausgleich hergestellt ist. Das aktuelle Innenvolumen $V_i$ wird hierbei aus dem an der Stelleinrichtung 12i momentan vorliegenden Fahrzeugaufbauniveau $d_{i,ist}$ abgeleitet; letzteres lässt einen unmittelbaren Rückschluss auf die jeweilige Kolbenstellung der Stelleinrichtung 12i zu.

Zur Ermittlung des momentan vorliegenden Fahrzeugaufbauniveaus $d_{i,ist}$ ist eine Niveauerfassungseinrichtung 26 vorhanden, deren Signale der Auswerteeinheit 24 zugeführt werden. Die Niveauerfassungseinrichtung 26 weist hierzu mehrere nicht dargestellte Stellwegsensoren auf, die jeweils den Stelleinrichtungen 12i zugeordnet sind.

Aus der so abgeschätzten Druckmittelmenge $\Delta N_{max}$, dem aktuellen Innenvolumen $V_i$ der Stelleinrichtung 12i sowie deren charakteristischem Stellverhalten - insbesondere der Veränderung der druckwirksamen Kolbenfläche der Stelleinrichtung 12i in Abhängigkeit des momentan vorliegenden Fahrzeugaufbauniveaus $d_{i,ist}$ - wird von der Auswerteeinheit 24 für jede der vom Einstellvorgang betroffenen Stelleinrichtungen 12i ein für die Durchführung des Überströmvorgangs zu erwartendes Fahrzeugaufbauniveau $d_{i,soll}$ berechnet.

Ist beispielsweise ein Anheben des Fahrzeugaufbaus auf ein vorgegebenes Fahrzeugaufbauniveau $d_{i,soll}$ beabsichtigt, so ist dies durch ausschließliche Betätigung der Ventileinrichtung 13 voraussichtlich dann möglich, wenn sich aufgrund des Vergleichs zwischen dem vorgegebenen Fahrzeugaufbauniveau $d_{i,soll}$ und dem zu erwartenden Fahrzeugaufbauniveaus $d_{i,erw}$ ergibt, dass das zu erwartende Fahrzeugaufbauniveau $d_{i,erw}$ abzüglich einer vorgegebenen Sicherheitsreserve $\Delta d_{safe}$ ($\approx$ 1...3 cm) größer oder gleich dem vorgegebenen Fahrzeugaufbauniveau $d_{i,soll}$ ist,

$$d_{i,erw} - \Delta d_{safe} \geq d_{i,soll} \quad . \qquad\qquad (2.1)$$

Trifft dies zu, so stellt die Auswerteeinheit 24 eine Druckverbindung zwischen dem Druckmittelspeicher 11 und den vom Einstellvorgang betroffenen Stelleinrichtungen 12i her, was durch Öffnen des Bypassventils 21 sowie der Absperrventile 14i der betreffenden Stelleinrichtungen 12i erfolgt. In diesem Fall strömt Druckmittel vom Druckmittelspeicher 11 in die jeweiligen Stelleinrichtungen 12i, wodurch der Fahrzeugaufbau in deren Bereich angehoben wird.

Wird festgestellt, dass die Einstellung des vorgegebenen Fahrzeugaufbauniveaus $d_{i,soll}$ durch ausschließliche Betätigung der Ventileinrichtung 13 nicht innerhalb einer vorgegebenen Zeitspanne $\Delta t_{max}$ möglich ist, so erfolgt eine unterstützende Betätigung des Druckerzeugers 10.

Die unterstützende Betätigung des Druckerzeugers 10 erfolgt hierbei mit Ablauf der vorgegebenen Zeitspanne $\Delta t_{max}$, wenn zugleich festgestellt wird, dass das vorgegebene Fahrzeugaufbauniveau $d_{i,soll}$ entgegen der ursprünglichen Voraussage bzw. den ursprünglichen Erwartungen durch ausschließliche Betätigung der Ventileinrichtung 13 noch nicht erreicht worden ist. Ob letzteres zutrifft, wird von der Auswerteeinheit 24 auf Basis eines Vergleich des momentan vorliegenden Fahrzeugaufbauniveaus $d_{i,ist}$ mit dem vorgegebenen Fahrzeugaufbauniveau $d_{i,soll}$ erkannt.

Ist das zu erwartende Fahrzeugaufbauniveau $d_{i,erw}$ abzüglich der Sicherheitsreserve $\Delta d_{safe}$ kleiner als das vorgegebene Fahrzeugaufbauniveau $d_{i,soll}$, aber für sich genommen größer oder gleich dem vorgegebenen Fahrzeugaufbauniveau $d_{i,soll}$,

$$d_{i,erw} - \Delta d_{safe} < d_{i,soll} \leq d_{i,erw} \quad , \qquad\qquad (2.2)$$

so wird darauf geschlossen, dass zum Einstellen des vorgegebenen Fahrzeugaufbauniveaus $d_{i,soll}$ zusätzlich zur Durchführung des Überströmvorgangs eine unterstützende Betätigung des Druckerzeugers 10 notwendig ist, wobei diese im vorliegenden Fall derart erfolgt, dass Druckmittel aus dem Druckmittelspeicher 11 in die vom Einstellvorgang betroffenen Stelleinrichtungen 12i gepumpt wird.

Ist das zu erwartende Fahrzeugaufbauniveau $d_{i,erw}$ kleiner als das vorgegebene Fahrzeugaufbauniveau $d_{i,soll}$,

$$d_{i,erw} < d_{i,soll} \quad , \qquad\qquad (2.3)$$

so ist die Einstellung des vorgegebenen Fahrzeugaufbauniveaus $d_{i,soll}$ auf Grundlage der Durchführung eines Überströmvorgangs nicht möglich. Dementsprechend unterbleibt ein Öffnen des Bypassventils 21, und der Einstellvorgang erfolgt durch ausschließliche Betätigung des Druckerzeugers 10.

Die vorstehenden Betrachtungen gelten für ein Absenken des Fahrzeugaufbaus in analoger Weise, wobei für diesen Fall eine dem Bypassventil 21 entsprechende Betätigung des Bypassventils 20 vorgesehen ist.

Die Einstellung des momentan vorliegenden Fahrzeugaufbauniveaus $d_{i,ist}$ entsprechend des vorgegebenen Fahrzeugaufbauniveaus $d_{i,soll}$ erfolgt beispielsweise in Form eines von der Auswerteeinheit 24 koordinierten Einregelvorgangs.

An dieser Stelle sei angemerkt, dass es alternativ auch vorstellbar ist, das für den Fall der Durchführung des Überströmvorgangs zu erwartende Fahrzeugaufbauniveau $d_{i,erw}$ unmittelbar aus den Innendrücken p, $p_i$ bzw. den Innenvolumina V, $V_i$ zu berechnen. Handelt es sich um ein pneumatisch betriebenes Niveauregelsystem, so kann die Berechnung des zu erwartenden Fahrzeugaufbauniveaus $d_{i,erw}$ insbesondere auch auf Basis einer dimensionslosen Größe $\lambda_i$ erfolgen, die das Verhältnis zwischen der aktuellen Luftmasse m im Druckmittelspeicher 11 und der aktuellen Luftmasse $m_i$ in der zumindest einen Stelleinrichtung 12i wiedergibt,

$$\lambda_i = \frac{m}{m_i} \quad . \tag{2.4}$$

Unter der Annahme, dass sich die Luft innerhalb des Niveauregelsystems wie ein ideales Gas verhält, ergibt sich aus Gleichung (2.4) im Zusammenhang mit der in diesem Fall geltenden allgemeinen Gasgleichung $p \cdot V = m \cdot R \cdot T$ ein Verhältnis der Gestalt

$$\frac{p \cdot V = m \cdot R \cdot T}{p_i \cdot V_i = m_i \cdot R \cdot T_i} \quad , \tag{2.5}$$

wobei R die allgemeine Gaskonstante ($R = 8,314\ \mathrm{J/mol^{-1} \cdot K^{-1}}$) darstellt.

Wird vorausgesetzt, dass die Temperaturen im Druckmittelspeicher 11 und in der zumindest einen Stelleinrichtung 12i im wesentlichen gleich sind, $T \approx T_i$, so folgt aus Gleichung (2.5) weiterhin

$$\frac{p \cdot V = m}{p_i \cdot V_i = m_i} \quad . \tag{2.6}$$

Die so gewonnene dimensionslose Größe $\lambda_i$ hat den Vorteil, dass diese im Gegensatz zu den Innendrücken $p$, $p_i$ bzw. den Innenvolumina $V$, $V_i$ weitgehend von der Temperatur unabhängig ist. Diese ermöglicht daher eine besonders einfache und zuverlässige Berechnung des jeweils zu erwartenden Fahrzeugaufbauniveaus $d_{i,erw}$.

**Patentansprüche**

1. Niveauregelsystem für ein Fahrzeug, mit einem Druckerzeuger (10) zur Erzeugung einer Druckdifferenz zwischen einem Druckmittelspeicher (11) und zumindest einer druckgesteuerten Stelleinrichtung (12i), mittels derer sich ein vorgegebenes Fahrzeugaufbauniveau ($d_{i,soll}$) einstellen lässt, und mit einer Ventileinrichtung (13) zur Durchführung eines Überströmvorgangs zwischen dem Druckmittelspeicher (11) und der zumindest einen druckgesteuerten Stelleinrichtung (12i),
**dadurch gekennzeichnet, dass**
eine Auswerteeinheit (24) auf Grundlage eines für den Fall der Durchführung des Überströmvorgangs bis zur Herstellung eines Druckausgleichs zwischen dem Druckmittelspeicher (11) und der zumindest einen Stelleinrichtung (12i) zu erwartenden Fahrzeugaufbauniveaus ($d_{i,erw}$) entscheidet, ob und inwieweit die Einstellung des vorgegebenen Fahrzeugaufbauniveaus ($d_{i,soll}$) durch ausschließliche Betätigung der Ventileinrichtung (13) möglich ist.

2. Vorrichtung nach Anspruch 1,
**dadurch gekennzeichnet, dass**
die Entscheidung, ob und inwieweit die Einstellung des vorgegebenen Fahrzeugaufbauniveaus ($d_{i,soll}$) durch ausschließliche Betätigung der Ventileinrichtung (13) möglich ist, in Abhängigkeit eines Vergleichs zwischen dem vorgegebenen Fahrzeugaufbauniveau ($d_{i,soll}$) und dem zu erwartenden Fahrzeugaufbauniveau ($d_{i,erw}$) erfolgt.

3. Vorrichtung nach Anspruch 1,
**dadurch gekennzeichnet, dass**
eine unterstützende Betätigung des Druckerzeugers (10) erfolgt, wenn festgestellt wird, dass die Einstellung des vorgegebenen Fahrzeugaufbauniveaus ($d_{i,soll}$) durch ausschließliche Betätigung der Ventileinrichtung (13) nicht innerhalb einer vorgegebenen Zeitspanne ($\Delta t_{max}$) möglich ist.

4. Vorrichtung nach Anspruch 3,

**dadurch gekennzeichnet, dass** die unterstützende Betätigung des Druckerzeugers (10) mit Ablauf der vorgegebenen Zeitspanne ($\Delta t_{max}$) erfolgt.

**5.** Vorrichtung nach Anspruch 1,
**dadurch gekennzeichnet, dass**
die Auswerteeinheit (24) das zu erwartende Fahrzeugaufbauniveau ($d_{i,erw}$) auf Basis einer zwischen dem Druckmittelspeicher (11) und der zumindest einen druckgesteuerten Stelleinrichtung (12i) ermittelten Druckdifferenz ($\Delta \overline{p}_{i.i=a...d}$) berechnet.

**6.** Vorrichtung nach Anspruch 1,
**dadurch gekennzeichnet, dass**
die Auswerteeinheit (24) das zu erwartende Fahrzeugaufbauniveau ($d_{i,erw}$) auf Basis einer dimensionslosen Größe ($\lambda_i$) berechnet, die das Verhältnis zwischen der aktuellen Luftmasse (m) im Druckmittelspeicher (11) und der aktuellen Luftmasse ($m_i$) in der zumindest einen Stelleinrichtung (12i) wiedergibt.

**7.** Vorrichtung nach Anspruch 1,
**dadurch gekennzeichnet, dass**
es sich bei der zumindest einen druckgesteuerten Stelleinrichtung (12i) um ein pneumatisches oder hydraulisches Federbein handelt.

**8.** Vorrichtung nach Anspruch 1,
**dadurch gekennzeichnet, dass**
die zumindest eine druckgesteuerte Stelleinrichtung (12i) Bestandteil eines aktiven Fahrwerks des Fahrzeugs ist.

**9.** Vorrichtung nach Anspruch 1,
**dadurch gekennzeichnet, dass**
es sich um ein Niveauregelsystem mit geschlossenem Druckmittelkreislauf handelt.

**10.** Fahrzeug mit einem Niveauregelsystem nach wenigstens einem der vorhergehenden Ansprüche.

**11.** Verfahren zum Betreiben eines Niveauregelsystems mit einem Druckerzeuger (10) zur Erzeugung einer Druckdifferenz zwischen einem Druckmittelspeicher (11) und zumindest einer druckgesteuerten Stelleinrichtung (12i), mittels derer sich ein vorgegebenes Fahrzeugaufbauniveau ($d_{i,soll}$) einstellen lässt, und mit einer Ventileinrichtung (13) zur Durchführung eines Überströmvorgangs zwischen dem Druckmittelspeicher (11) und der zumindest einen druckgesteuerten Stelleinrichtung (12i),
**dadurch gekennzeichnet, dass**
auf Grundlage eines für den Fall der Durchführung des Überströmvorgangs bis zur Herstellung eines Druckausgleichs zwischen dem Druckmittelspeicher (11) und der zumindest einen Stelleinrichtung (12i) zu erwartenden Fahrzeugaufbauniveaus ($d_{i,erw}$) entschieden wird, ob und inwieweit eine Einstellung des vorgegebenen Fahrzeugaufbauniveaus ($d_{i,soll}$) durch ausschließliche Betätigung der Ventileinrichtung (13) möglich ist.

**Claims**

**1.** Level control system for a vehicle, having a pressure generator (10) for generating a pressure difference between a pressure medium reservoir (11) and at least one pressure-controlled actuating device (12i) by means of which it is possible to set a prescribed vehicle body level ($d_{i,soll}$), and having a valve device (13) for carrying out an overflow process between the pressure medium reservoir (11) and the at least one pressure-controlled actuating device (12i),
**characterized in that**
an evaluation unit (24) decides on the basis of a vehicle body level ($d_{i,erw}$) to be expected for the case of carrying out the overflow process until a pressure equalization is produced between the pressure medium reservoir (11) and the at least one actuating device (12i) whether and to what extent it is possible to set the prescribed vehicle body level ($d_{i,soll}$) solely by actuating the valve device (13).

**2.** Device according to Claim 1,
**characterized in that**
the decision as to whether and to what extent it is possible to set the prescribed vehicle body level ($d_{i,soll}$) solely by actuating the valve device (13) is made as a function of a comparison between the prescribed vehicle body level ($d_{i,soll}$) and the vehicle body level ($d_{i,erw}$) to be expected.

**3.** Device according to Claim 1,

**characterized in that**
the pressure generator (10) is actuated in a supporting fashion if it is established that it is not possible to set the prescribed vehicle body level ($d_{i,soll}$) solely by actuating the valve device (13) within a prescribed time period ($\Delta t_{max}$).

**4.** Device according to Claim 3,
**characterized in that**
the pressure generator (10) is actuated in a supporting fashion with the expiry of the prescribed time period ($\Delta t_{max}$).

**5.** Device according to Claim 1,
**characterized in that**
the evaluation unit (24) calculates the vehicle body level ($d_{i,erw}$) to be expected on the basis of a pressure difference ($\overline{\Delta p}_{i,i=a...d}$) determined between the pressure medium reservoir (11) and the at least one pressure-controlled actuating device (12i).

**6.** Device according to Claim 1,
**characterized in that**
the evaluation unit (24) calculates the vehicle body level ($d_{i,erw}$) to be expected on the basis of a dimensionless variable ($\lambda_i$) that represents the ratio between the current air mass (m) in the pressure medium reservoir (11) and the current air mass ($m_i$) in the at least one actuating device (12i).

**7.** Device according to Claim 1,
**characterized in that**
the at least one pressure-controlled actuating device (12i) is a pneumatic or hydraulic spring leg.

**8.** Device according to Claim 1,
**characterized in that**
the at least one pressure-controlled actuating device (12i) is a component of an active running gear of the vehicle.

**9.** Device according to Claim 1,
**characterized in that**
it is a level control system having a closed pressure medium circuit.

**10.** Vehicle having a level control system according to at least one of the preceding claims.

**11.** Method for operating a level control system having a pressure generator (10) for generating a pressure difference between a pressure medium reservoir (11) and at least one pressure-controlled actuating device (12i) by means of which it is possible to set a prescribed vehicle body level ($d_{i,soll}$), and having a valve device (13) for carrying out an overflow process between the pressure medium reservoir (11) and the at least one pressure-controlled actuating device (12i),
**characterized in that**
it is decided on the basis of a vehicle body level ($d_{i,erw}$) to be expected for the case of carrying out the overflow process until a pressure equalization is produced between the pressure medium reservoir (11) and the at least one actuating device (12i) whether and to what extent it is possible to set the prescribed vehicle body level ($d_{i,soll}$) solely by actuating the valve device (13).

**Revendications**

**1.** Système de correction d'assiette pour un véhicule, qui présente
un dispositif (10) d'établissement de pression qui établit une différence de pression entre une réserve (11) de fluide sous pression et au moins un dispositif de réglage (12i) asservi à la pression, au moyen duquel un niveau prédéterminé ($d_{i,soll}$) du châssis du véhicule peut être établi, et
un dispositif de soupape (13) qui exécute une opération de débordement entre la réserve (11) de fluide sous pression et le ou les dispositifs de réglage (12i) asservis à la pression,
**caractérisé en ce que**
une unité d'évaluation (24) basée sur un niveau attendu ($d_{i,erw}$) du châssis du véhicule au cas où l'opération de débordement est exécutée jusqu'à établissement d'un équilibrage de pression entre la réserve (11) de fluide sous pression et le ou les dispositifs de réglage (12i) décide si et dans quelle mesure le réglage du niveau ($d_{i,soll}$)

prédéterminé du châssis du véhicule peut être obtenu uniquement par actionnement du dispositif de soupape (13).

2. Dispositif selon la revendication 1, **caractérisé en ce que** la décision de régler le niveau prédéterminé ($d_{i,soll}$) du châssis du véhicule uniquement par actionnement du dispositif de soupape (13) et si oui, dans quelle mesure, s'effectue en fonction d'une comparaison entre le niveau ($d_{i,soll}$) prédéterminé du châssis du véhicule et le niveau attendu ($d_{i,erw}$) du châssis du véhicule.

3. Dispositif selon la revendication 1, **caractérisé en ce qu'**un actionnement de soutien du dispositif (10) d'établissement de pression a lieu lorsqu'il est constaté que le réglage du niveau prédéterminé ($d_{i,soll}$) du châssis du véhicule uniquement par actionnement du dispositif de soupape (13) n'est pas possible à l'intérieur d'une durée prédéterminée ($\Delta t_{max}$).

4. Dispositif selon la revendication 3, **caractérisé en ce que** l'actionnement de soutien du dispositif (10) d'établissement de pression s'effectue pendant que s'écoule la durée prédéterminée ($\Delta t_{max}$).

5. Dispositif selon la revendication 1, **caractérisé en ce que** l'unité d'évaluation (24) calcule le niveau attendu ($d_{i,erw}$) du châssis du véhicule sur base d'une différence de pression ($\Delta \overline{p}_{i,i=a..d}$) déterminée entre la réserve (11) de fluide sous pression et le ou les dispositifs de réglage (12i) asservis à la pression.

6. Dispositif selon la revendication 1, **caractérisé en ce que** l'unité d'évaluation (24) calcule le niveau attendu ($d_{i,erw}$) du châssis du véhicule sur base d'une grandeur sans dimension ($\lambda_i$) qui correspond au rapport entre la masse d'air (m) effectivement présente dans la réserve (11) de fluide sous pression et la masse d'air ($m_i$) effectivement présente dans le ou les dispositifs de réglage (12i).

7. Dispositif selon la revendication 1, **caractérisé en ce que** le dispositif (12i) de réglage asservi à la pression est un amortisseur pneumatique ou hydraulique.

8. Dispositif selon la revendication 1, **caractérisé en ce que** le ou les dispositifs de réglage (12i) asservis à la pression font partie d'un train de roulement actif du véhicule.

9. Dispositif selon la revendication 1, **caractérisé en ce que** le système de correction d'assiette est un système à circuit fermé de fluide sous pression.

10. Véhicule doté d'un système de correction d'assiette selon au moins l'une des revendications précédentes.

11. Procédé de conduite d'un système de correction d'assiette qui présente un dispositif (10) d'établissement de pression qui établit une différence de pression entre une réserve (11) de fluide sous pression et au moins un dispositif de réglage (12i) asservi à la pression qui permet d'établir un niveau prédéterminé ($d_{i,soll}$) du châssis du véhicule, et un dispositif de soupape (13) qui exécute une opération de débordement entre la réserve (11) de fluide sous pression et le ou les dispositifs de réglage (12i) asservis à la pression,
**caractérisé en ce que**
sur baqse d'un niveau attendu ($d_{i,erw}$) du châssis du véhicule au cas où l'opération de débordement est exécutée jusqu'à établissement d'un équilibrage de pression entre la réserve (11) de fluide sous pression et le ou les dispositifs de réglage (12i), le procédé décide si et dans quelle mesure le réglage du niveau ($d_{i,soll}$) prédéterminé du châssis du véhicule peut être obtenu uniquement par actionnement du dispositif de soupape (13).

Fig.

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 10006024 C1

- EP 0945288 A2